# FASCICULE DE BREVET EUROPEEN

(11) **EP 0 774 407 B1**
(45) Date de publication et mention de la délivrance du brevet: **16.05.2001**
(21) Numéro de dépôt: 96402397.2
(22) Date de dépôt: 12.11.1996
(51) Int. Cl.: B62M 3/08

(54) **Dispositif de fixation sur la chaussure d'un cycliste**
Verbindungsvorrichtung auf einem Radfahrerschuh
Connecting device on a cyclists shoe

(30) Priorité: 17.11.1995 FR 9513629
(43) Date de publication de la demande: 21.05.1997
(73) Titulaire: Look Cycle International, 58000 Nevers (FR)
(72) Inventeur: Peyre, Henri, 58270 Saint Benin D'Azy (FR)
(74) Mandataire: Boutin, Antoine

(56) Documents cités:
- EP-A- 0 542 238
- FR-A- 2 464 660
- FR-A- 2 645 826
- FR-A- 2 692 222

## Description

L'invention est relative à un dispositif de fixation sur la chaussure d'un cycliste.

Le document FR 2 692 222 décrit une pédale à fixation rapide, sans cale-pied, avec deux côtés pouvant se mettre en prise avec un dispositif de fixation. Ledit dispositif 7 de fixation sur la chaussure d'un cycliste est en une seule pièce 7 apte à coopérer avec une pédale automatique comprenant une partie 13 de châssis rectangulaire. Le document FR-A-2464660 montre un dispositif selon le préambule de la revendication 1.

Les dispositifs de fixation de type connu comportent généralement des première et deuxième parties de mise en prise respectivement prévues sur les extrémités avant et arrière, ainsi qu'au moins un trou traversant en vue de la fixation sur la chaussure d'un cycliste. Après avoir mis en place le dispositif de fixation sur la chaussure de cycliste, on engage la partie de mise en prise de l'extrémité avant de manière à se mettre en prise avec l'extrémité avant de la pédale à fixation rapide et on exerce un appui vers le bas, ce qui provoque un basculement vers l'arrière des organes de fixation solidaires de la pédale. Ainsi, les organes de fixation solidaires de la pédale sont écartés l'un de l'autre par l'appui exercé par l'intermédiaire de la chaussure, puis reviennent naturellement l'un vers l'autre en raison de la présence d'organes de précontrainte élastique et de rappel en position rapprochée.

Actuellement, ces dispositifs de fixation comportent ainsi une partie inférieure assurant une fonction d'écartement des organes de fixation de la pédale et une partie supérieure directement au contact de la semelle de la chaussure qui assure une fonction de guidage et permet une certaine mobilité angulaire de la chaussure par rapport à la pédale. Cette partie supérieure comporte généralement des plans inclinés appelés "pentes de retenue" par les spécialistes ayant pour fonction d'assurer la dureté de sécurité au déchaussage.

Selon le type de pratique sportive ou la morphologie de l'utilisateur, celui-ci a besoin de plus ou moins de mobilité angulaire latérale : ainsi, on peut souhaiter une grande mobilité angulaire latérale dans certains cas, tandis que, dans d'autres cas, on peut souhaiter une faible mobilité angulaire ou un ajustement en position fixe sur la pédale automatique.

Il est par conséquent nécessaire de fournir plusieurs dispositifs de fixation par chaussure, de façon à permettre la pratique de plusieurs activités sportives ou l'adaptation de la mobilité angulaire à la morphologie de l'utilisateur.

L'invention a pour but de remédier à ces inconvénients, en créant un nouveau dispositif de fixation sur chaussure de cycliste qui permet la pratique de plusieurs types de sports ou l'adaptation à la morphologie de l'utilisateur avec un seul dispositif de fixation.

L'invention a pour objet un dispositif de fixation sur la chaussure d'un cycliste, comprenant un organe de guidage et un organe d'encliquetage sur une pédale automatique de cycle, caractérisé en ce que l'organe de guidage et l'organe d'encliquetage sont constitués par deux pièces distinctes séparées aptes à être positionnées l'une par rapport à l'autre selon deux configurations distinctes, caractérisé en ce que l'organe de guidage comporte une paire d'excroissances formant butées latérales permettant un grand débattement angulaire et une autre paire d'excroissances délimitant une conformation permettant un ajustement en position sensiblement fixe sur la pédale automatique.

Selon d'autres caractéristiques de l'invention :
- les deux pièces séparées comportent chacun une paire d'organes de positionnement, chaque organe de chaque paire coopère avec l'un ou l'autre organe de chaque paire selon l'une ou l'autre configuration distincte du dispositif ;
- une pièce comporte deux pions de positionnement, l'autre pièce comporte deux orifices coopérant avec lesdits pions ;
- les contours de l'organe de guidage adjacents à l'extrémité arrière de l'organe d'encliquetage sont en affleurement avec cette extrémité arrière ou légèrement en saillie par rapport à cette extrémité arrière ;
- l'organe d'encliquetage est réalisé par frittage ou par matriçage d'acier spécial ;
- le dispositif comporte une cale d'épaisseur placée entre lesdites deux pièces distinctes séparées ;
- ladite cale d'épaisseur est réalisée en matière plastique, en Nylon (marque déposée) ou matière souple analogue faiblement compressible ;
- chaque pièce distincte séparée comporte deux orifices permettant le passage de vis de fixation dans l'une ou l'autre configuration distincte ;
- l'organe de guidage comporte des picots, griffes, crampons ou conformations analogues aptes à solidariser le dispositif avec la chaussure d'un cycliste.

L'invention sera mieux comprise grâce à la description qui va suivre, donnée à titre d'exemple non limitatif en référence aux dessins annexés dans lesquels :

La figure 1A représente schématiquement en vue de dessus un dispositif selon l'invention agencé de manière à fournir un ajustement en position fixe sur la pédale automatique.

La figure 1B représente schématiquement en coupe selon la ligne B-B de la figure 1A d'un dispositif selon l'invention.

La figure 1C représente schématiquement une vue en coupe d'un dispositif selon l'invention selon la ligne C-C de la figure 1A.

La figure 2A représente schématiquement en vue de dessus un dispositif selon l'invention agencé de manière à assurer au pied du cycliste une liberté angulaire dans le plan de la pédale automatique.

La figure 2B représente schématiquement une vue en coupe du dispositif selon l'invention selon la ligne B-B de la figure 2A.

La figure 2C représente schématiquement une vue en coupe du dispositif selon l'invention selon la ligne C-C de la figure 2A.

La figure 3 représente schématiquement une vue dans le sens de la flèche D de la figure 1C, d'une cale de guidage d'un dispositif selon l'invention.

La figure 4 représente schématiquement une vue de dessus d'une cale d'épaisseur d'un dispositif selon l'invention.

La figure 5 représente schématiquement une vue de dessous d'un organe d'écartement et de retenue en hauteur d'un dispositif selon l'invention.

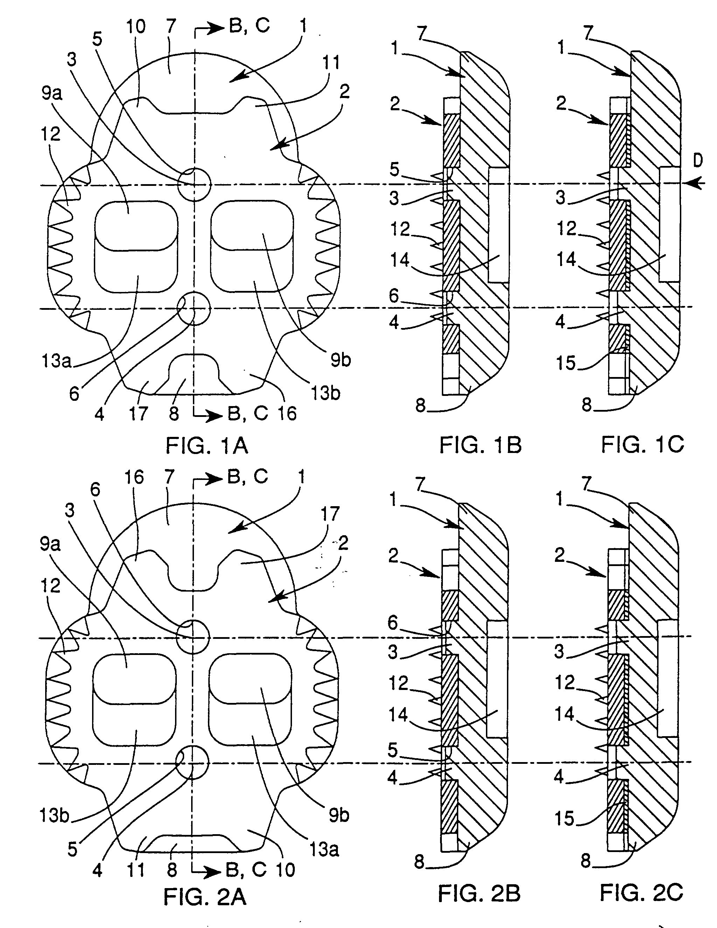

En référence aux figures 1A et 1B, un dispositif selon l'invention comprend un organe d'encliquetage 1 et un organe de guidage 2, constitué par deux pièces séparées positionnées l'une par rapport à l'autre à l'aide de pions centreurs 3 et 4 engagés dans des perçages correspondant 5 et 6. L'organe d'encliquetage 1 provoque le basculement et l'écartement de crochets de fixation solidaires de la pédale automatique et assure également la retenue et le maintien en hauteur du dispositif selon l'invention sur une pédale automatique.

Dans cet exemple, les pions 3 et 4 sont solidaires de l'organe d'encliquetage 1 et les orifices 5 et 6 sont pratiqués dans l'organe de guidage 2 : l'invention couvre bien entendu toutes variantes d'organes de positionnements coopérant l'un avec l'autre pour positionner les pièces 1 et 2 l'une par rapport à l'autre selon deux configurations distinctes, dont la première est représentée aux figures 1A à 1C et la deuxième est représentée aux figures 2A à 2C.

La pièce 1 d'encliquetage comporte de manière connue une extrémité avant 7, une extrémité arrière 8 et deux orifices oblongs 9a et 9b permettant le passage de vis de solidarisation du dispositif à une chaussure de cycliste. L'extrémité avant 7 de la pièce 1 d'encliquetage présente une conformation en demi-cercle par rapport au centre de laquelle la pièce 1 tourne lors du déchaussage. Les deux extrémités avant 7 et arrière 8 comportent des pentes d'engagement inclinées sensiblement à 45° par rapport à un plan parallèle au plan de solidarisation à la semelle de la chaussure.

L'organe 2 de guidage comporte une première extrémité avec deux excroissances 10 et 11 formant butées latérales de retenue et actionnant le crochet de la pédale automatique lors du mouvement de libération de la chaussure.

L'organe 2 de guidage comporte une deuxième extrémité avec deux excroissances 16 et 17 délimitant une conformation complémentaire d'une pièce en saillie, de la pédale automatique non représentée.

Du fait que la conformation séparant les excroissances 16 et 17 est complémentaire de la pièce en saillie de la pédale automatique, le dispositif des figures 1A et 1B permet un positionnement précis de la chaussure par rapport à la pédale automatique et une solidarisation favorable à une bonne transmission de l'effort.

Des picots 12 sont prévus de part et d'autre de la zone de fixation du dispositif sur la chaussure de cycliste, de manière à pénétrer dans une surface de la chaussure et à solidariser fermement le dispositif selon l'invention avec une chaussure de cycliste.

Des orifices de passages 13a et 13b sont prévus dans l'organe de guidage 2 pour le passage de vis de fixation traversant les orifices 9a et 9b situés de part et d'autre du plan de coupe 8-8.

Un lamage oblong 14 est prévu sur la face extérieure de l'organe d'encliquetage 1 pour placer une plaquette de fixation non représentée de support des vis à tête fraisée traversant respectivement les orifices 9a et 13a, 9b et 13b.

Grâce à l'inventio., les fonctions d'encliquetage ou d'enclenchement du dispositif sur la pédale automatique et de guidage de la chaussure par rapport à cette pédale automatique sont dissociées et réalisées par deux pièces distinctes séparées, aptes à être positionnées l'une par rapport à l'autre selon deux configurations distinctes.

En référence aux figures 1A et 1C, les chiffres de repères identiques désignent des éléments identiques ou fonctionnellement équivalents à ceux des figures 1A et 1B.

Ce mode de réalisation comprend en outre une cale d'épaisseur 15 permettant de compenser les différences de hauteur dans l'épaisseur des semelles de chaussure ou de compenser l'usure du dispositif selon l'invention, d'une pédale automatique ou d'une chaussure de cycliste.

La cale d'épaisseur 15 peut être réalisée en un matériau non métallique, notamment une matière plastique ou du Nylon (marque déposée), du fait qu'elle est prisonnière et comprimée entre les pièces 1 et 2 réalisées chacune de préférence en matériau métallique.

En référence aux figures 2A, 2B et 2C, les chiffres de repères identiques désignent des éléments identiques ou fonctionnellement équivalents à ceux des figures 1A, 1b et 1C.

Dans ce dispositif, l'organe de guidage 2 a pivoté de 180° par rapport à l'organe d'encliquetage 1, de sorte que le pion 3 coopère avec l'orifice 6 et que le pion 4 coopère avec l'orifice 5.

Dans cette disposition, les orifices 9a et 13b permettent le passage d'une vis de fixation non représentée et les orifices 9b et 13a permettent le passage de l'autre vis de fixation non représentée. Les excroissances 10 et 11 qui se trouvaient à l'extrémité avant du dispositif sont maintenant placées à l'arrière du dispositif. Dans cette position, les excroissances 10 et 11 délimitent une conformation permettant un débattement angulaire de l'ordre de plus ou moins cinq degrés d'angle de la pièce en saillie de la pédale automatique et constituent des butées de débattement angulaire de cette pièce en saillie non représentée.

De manière connue, la fonction de butée latérale de retenue est assurée dans tous les cas par l'extrémité avant 7 de la pièce 1 d'encliquetage.

La conformation des excroissances 10, 11, 16 et 17 est prévue pour s'inscrire dans la position où elles sont superposées avec l'extrémité arrière 8 de l'organe de guidage 1 en affleurement de cette extrémité arrière 8 ou légèrement en saillie de cette extrémité arrière 8.

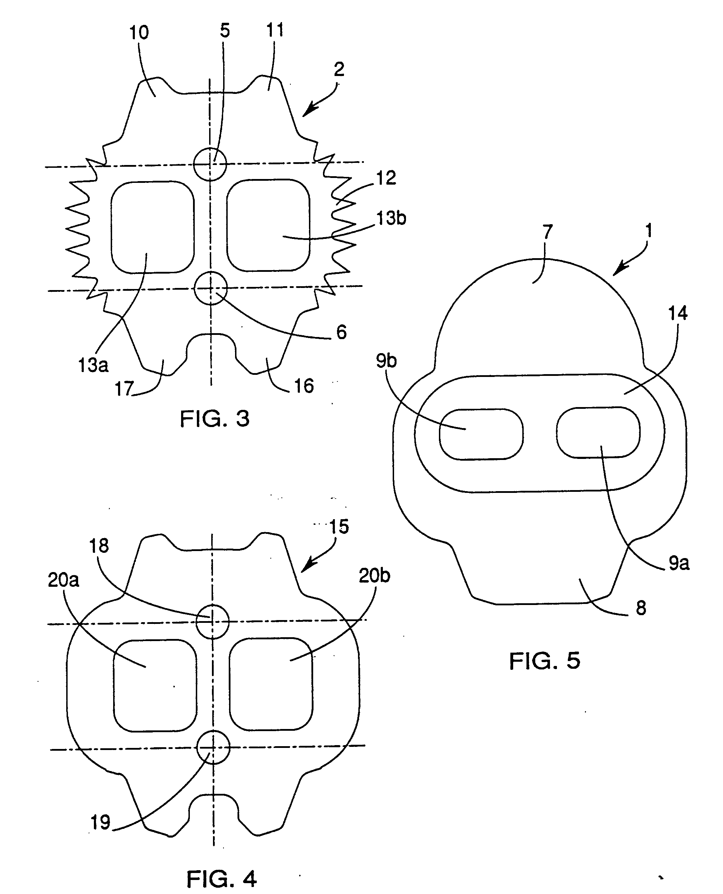

En référence aux figures 3 à 5, les pièces distinctes séparées constituant un dispositif selon l'invention sont représentées en vue dans le sens de la flèche D de la figure 1C.

L'organe de guidage 2 représenté à la figure 3 est constitué de préférence à partir d'une pièce d'acier ordinaire carbonitruré et trempé pourvue de griffes ou crampons 12 propres à pénétrer la semelle d'une chaussure de cycliste. La pièce est réalisée de préférence par découpage d'une pièce de tôle en acier ordinaire carbonitruré, trempé après découpe correspondant au perçage des orifices 5 et 6, à la découpe du contour des orifices 13a et 13b, et à la découpe du contour extérieur avec constitution des griffes ou crampons 12 par pliage.

L'organe d'encliquetage ou d'enclenchement 1 est constitué par emboutissage, matriçage ou frittage d'un acier spécial, suivi d'une carbonitruration ou d'une trempe, de manière à délimiter le logement 14 pour une plaquette de fixation non représentée, les orifices 9a, 9b de passage des vis et les extrémités d'enclenchement avant 7 et arrière 8. Il est également possible de réaliser cet organe d'encliquetage ou d'enclenchement 1 par emboutissage et usinage d'une tôle en acier spécial carbonitruré et trempé, mais cette réalisation présente l'inconvénient d'être plus coûteuse.

La cale d'épaisseur 15 comporte un contour extérieur sensiblement identique au contour extérieur de l'organe de guidage 2 et des orifices 18 et 19 permettant le passage des pions 3 et 4 de l'organe d'encliquetage 1, ainsi qu'une découpe d'orifices 20a et 20b correspondant aux orifices 13a et 13b de l'organe de guidage 2.

L'invention permet ainsi avec un dispositif unique constitué par assemblage de deux pièces distinctes séparées d'obtenir avec un même dispositif une cale fournissant un ajustement et une solidarisation de la chaussure avec la pédale automatique et une cale fournissant un débattement angulaire entre la chaussure et la pédale automatique.

L'invention simplifie également le conditionnement et la fabrication des dispositifs de fixation sur la chaussure d'un cycliste en divisant par deux le nombre de dispositifs nécessaires aux deux utilisations. En effet, il est nécessaire actuellement de fournir par paire de pédales automatiques une première paire de cales ajustées aptes à solidariser étroitement une chaussure à une pédale et une deuxième paire de cales à liberté angulaire aptes à solidariser une chaussure à une pédale en fournissant un débattement angulaire.

La dissociation des fonctions d'enclenchement et de guidage obtenue grâce à l'invention permet en outre de réduire les coûts de fabrications, puisque les opérations de matriçage à chaud des première et deuxième paires de cales de l'art antérieur sont supprimées grâce à l'invention.

L'invention décrite en référence à un mode de réalisation préféré n'y est nullement limitée et couvre au contraire toutes modifications de formes et toutes variantes de réalisation dans le cadre de l'invention.

En particulier, l'engagement de la cale sur la pédale pour l'ouverture du levier peut se faire non seulement d'arrière en avant, mais également verticalement ou d'avant en arrière grâce aux pentes d'engagement inclinées à 45° prévues sur la partie avant et sur la partie arrière.

## Revendications

1. Dispositif de fixation sur la chaussure d'un cycliste, comprenant un organe de guidage (2) et un organe d'encliquetage (1) sur une pédale automatique de cycle, dans lequel l'organe de guidage (2) et l'organe d'encliquetage (1) sont constitués par deux pièces (1, 2) distinctes séparées aptes à être positionnées l'une par rapport à l'autre selon deux configurations distinctes, caractérisé en ce que l'organe de guidage (2) comporte, une paire d'excroissances (10, 11) formant butées latérales permettant un grand débattement angulaire et une autre paire d'excroissances (16, 17) délimitant une conformation permettant un ajustement en position fixe sur la pédale automatique.

2. Dispositif selon la revendication 1, caractérisé en ce que les deux pièces séparées (1, 2) comportent chacune une paire d'organes (3, 4 ; 5, 6) de positionnement et en ce que chaque organe (3, 4 ; 5, 6) de chaque paire coopère avec l'un (5, 6 ; 3, 4) ou l'autre (6, 5 ; 4, 3) organe de chaque paire selon l'une ou l'autre configuration distincte du dispositif.

3. Dispositif selon la revendication 1 ou la revendication 2, caractérisé en ce qu'une pièce (1) comporte deux pions (3, 4) de positionnement et en ce que l'autre pièce (2) comporte deux orifices (5, 6) coopérant avec lesdits pions (3, 4).

4. Dispositif selon l'une quelconque des revendications précédentes, caractérisé en ce que les contours (10, 11 ; 16, 17) de l'organe de guidage (2) adjacents à l'extrémité arrière (8) de l'organe d'encliquetage (1) sont en affleurement avec cette extrémité arrière (8) ou légèrement en saillie par rapport à cette extrémité arrière (8).

5. Dispositif selon l'une quelconque des revendications précédentes, caractérisé en ce que l'organe d'encliquetage (1) est réalisé par frittage ou par matriçage d'acier spécial.

6. Dispositif selon l'une quelconque des revendications précédentes, caractérisé en ce que le dispositif comporte une cale d'épaisseur (15) placée entre lesdites deux pièces distinctes séparées (1, 2).

7. Dispositif selon la revendication 7, caractérisé en ce que ladite cale d'épaisseur (15) est réalisée en matière plastique, en Nylon (marque déposée) ou matière souple analogue faiblement compressible.

8. Dispositif selon l'une quelconque des revendications précédentes, caractérisé en ce que chaque pièce distincte séparée (1 ; 2) comporte deux orifices (9a, 9b, 13a, 13b) permettant le passage de vis de fixation dans l'une ou l'autre configuration distincte.

9. Dispositif selon l'une quelconque des revendications précédentes, caractérisé en ce que l'organe de guidage (2) comporte des picots (12), griffes, crampons ou conformations analogues aptes à solidariser le dispositif avec la chaussure d'un cycliste.

## Patentansprüche

1. Befestigungsvorrichtung am Schuh eines Radfahrers, bestehend aus einem Führungsorgan (2) und einem Einschnapporgan (1) an einem automatischen Fahrradpedal, wobei das Führungsorgan (2) und das Einschnapporgan (1) aus zwei voneinander getrennten, einzelnen Teilen (1, 2) bestehen, die geeignet sind, in zwei bestimmten Konfigurationen zueinander positioniert zu werden,
**dadurch gekennzeichnet, dass** das Führungsorgan (2) ein Paar Ausstülpungen (10, 11) aufweist, die seitliche Anschläge bilden, welche einen großen Winkelausschlag erlauben, sowie ein weiteres Paar Ausstülpungen (16, 17) aufweist, die eine Form bilden, welche ein Einstellen in einer festen Position auf dem automatischen Pedal ermöglicht.

2. Vorrichtung nach Anspruch 1, **dadurch gekennzeichnet, dass** die beiden einzelnen Teile (1, 2) jeweils ein Paar Positionierungsorgane (3, 4; 5, 6) aufweisen und dass je nach der einen oder der anderen bestimmten Konfiguration der Vorrichtung jedes Organ (3, 4; 5, 6) jedes Paares mit dem einen (5, 6; 3, 4) oder dem anderen (6, 5; 4, 3) Organ jedes Paares zusammenwirkt.

3. Vorrichtung nach Anspruch 1 oder 2, **dadurch gekennzeichnet, dass** ein Teil (1) zwei Positionierstifte (3, 4) aufweist, und dass das andere Teil (2) zwei Öffnungen (5, 6) aufweist, die mit den genannten Positionierstiften (3, 4) zusammenwirken.

4. Vorrichtung nach einem der vorherigen Ansprüche, **dadurch gekennzeichnet, dass** die Konturen (10, 11; 16, 17) des Führungsorgans (2), die an das hintere Ende (8) des Einschnapporgans (1) angrenzen, mit diesem hinteren Ende (8) fluchten oder leicht über dieses hintere Ende (8) hinausstehen.

5. Vorrichtung nach einem der vorherigen Ansprüche, **dadurch gekennzeichnet,** dass das Einschnapporgan (1) durch Sintern oder durch Pressen von Spezialstahl hergestellt wird.

6. Vorrichtung nach einem der vorherigen Ansprüche, **dadurch gekennzeichnet, dass** sie eine Beilage (15) aufweist, die zwischen den genannten beiden getrennten, einzelnen Teilen (1, 2) angeordnet ist.

7. Vorrichtung nach Anspruch 6, **dadurch gekennzeichnet, dass** die genannte Beilage (15) aus Kunststoff, aus Nylon (eingetragene Marke) oder aus einem ähnlichen weichen, leicht zusammendrückbaren Material besteht.

8. Vorrichtung nach einem der vorherigen Ansprüchen **dadurch gekennzeichnet, dass** jedes getrennte, einzelne Teil (1, 2) zwei Öffnungen (9a, 9b, 13a, 13b) aufweist, durch die in der einen oder der anderen bestimmten Konfiguration befestigungsschrauben gesteckt werden können.

9. Vorrichtung nach einem der vorherigen Ansprüche, **dadurch gekennzeichnet, dass** das Führungsorgan (2) Stacheln (12), Krallen, Stollen oder ähnliche Formgebungen aufweist, die geeignet sind, die Vorrichtung fest mit dem Schuh eines Radfahrers zu verbinden.

## Claims

1. Device for fixing on a cyclist's shoe, comprising a guide member (2) and a locking member (1) for locking on an automatic pedal of a cycle, in which the guide member (2) and the locking member (1) consist of two separate distinct parts (1, 2) adapted to be positioned relative to one another in two distinct configurations, characterised in that the guide member (2) comprises a pair of protuberances (10, 11) forming lateral stops allowing large angular clearance and a further pair of protuberances (16, 17) delimiting a conformation allowing adjustment into a fixed position on the automatic pedal.

2. Device according to claim 1, characterised in that the two separate parts (1, 2) each comprise a pair of positioning members (3, 4; 5, 6) and in that each member (3, 4; 5, 6) of, each pair cooperates with one (5, 6; 3, 4) or other (6, 5; 4, 3) member of each pair in accordance with one or other distinct configuration of the device.

3. Device according to claim 1 or claim 2, characterised in that one part (1) comprises two positioning pieces (3, 4) and in that the other part (2) comprises two apertures (5, 6), cooperating with said pieces (3, 4).

4. Device according to any of the preceding claims, characterised in that the contours (10, 11; 16, 17) of the guide member (2) adjacent to the back end (8) of the locking member (1) are flush with this back end (8) or project slightly with respect to this back end (8).

5. Device according to any of the preceding claims, characterised in that the locking member (1) is produced by sintering or die stamping special steel.

6. Device according to any of the preceding claims, characterised in that the device comprises a shim (15) placed between said two separate distinct parts (1, 2).

7. Device according to claim 7, characterised in that said shim (15) is produced in plastics material, in Nylon (registered trademark) or similar slightly compressible flexible material.

8. Device according to any of the preceding claims, characterised in that each separate distinct part (1; 2) comprises two apertures (9a, 9b, 13a, 13b) allowing the passage of fixing screws in one or other distinct configuration.

9. Device according to any of the preceding claims, characterised in that the guide member (2) comprises points (12), talons, crampons or similar conformations for interlocking the device with a cyclist's shoe.
